(19) Europäisches Patentamt
European Patent Office
Office européen des brevets

(11) EP 3 096 632 B1

(12) EUROPEAN PATENT SPECIFICATION

(45) Date of publication and mention
of the grant of the patent:
**06.03.2019 Bulletin 2019/10**

(21) Application number: **15700758.4**

(22) Date of filing: **22.01.2015**

(51) Int Cl.:
*A23G 9/04* $^{(2006.01)}$      *A23G 9/34* $^{(2006.01)}$
*A23G 9/44* $^{(2006.01)}$

(86) International application number:
**PCT/EP2015/051254**

(87) International publication number:
**WO 2015/110530 (30.07.2015 Gazette 2015/30)**

(54) **FROZEN BEVERAGE**

GEFRORENES GETRÄNK

BOISSON SURGELÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.01.2014 EP 14152101**

(43) Date of publication of application:
**30.11.2016 Bulletin 2016/48**

(73) Proprietors:
• **Unilever PLC**
**London, Greater London EC4Y 0DY (GB)**
Designated Contracting States:
**CY GB IE MT**
• **Unilever NV**
**3013 AL Rotterdam (NL)**
Designated Contracting States:
**AL AT BE BG CH CZ DE DK EE ES FI FR GR HR HU IS IT LI LT LU LV MC MK NL NO PL PT RO RS SE SI SK SM TR**

(72) Inventors:
• **JUDGE, Phillippa**
**Bedford**
**Bedfordshire MK44 1LQ (GB)**

• **MARINOV, George, Simeonov**
**Bedford**
**Bedfordshire MK44 1LQ (GB)**
• **MITCHELL, John, Turner**
**Bedford**
**Bedfordshire MK44 1LQ (GB)**
• **WILLIAMSON, Ann-Marie**
**Bedford**
**Bedfordshire MK44 1LQ (GB)**

(74) Representative: **Keenan, Robert Daniel**
**Unilever Patent Group**
**Colworth Science Park**
**Sharbrook**
**Bedfordshire MK44 1 LQ (GB)**

(56) References cited:
**EP-A1- 1 749 882       EP-A1- 2 625 965**
**EP-A2- 0 201 974       EP-A2- 1 051 913**
**WO-A1-97/43913        WO-A1-2006/007924**
**WO-A1-2010/054829    CN-B- 102 058 124**
**US-A- 3 826 829         US-A1- 2011 300 264**

**Description**

The invention relates to a frozen beverage, in particular to a frozen beverage with reduced perceived organoleptic coldness comprising an ice crystal population wherein the number average length of the longest dimension of the ice crystals is 110 to 300, and an ingredient having a Trouton ratio of at least 75 as measured in a 0.2 wt. % aqueous solution at 20 degrees centigrade, wherein the number average length of the longest dimension of the ice crystal population is 110 to 300 microns, wherein the distribution of the number average length of the longest dimension of the ice crystals is monomodal.

US 3 826 829 (General Foods Corporation) discloses a liquid beverage formulation which may be consumed as either a conventional soft drink or as a soft frozen slush beverage containing fine-grained ice crystals. The formulation is formed with water, sugars, polyols, flavour and colour agents, and an effective amount of a stabilising agent which includes pectin in combination with other gums. Example 1 describes a beverage comprising low methoxyl pectin which imparted a lower viscosity to the drink. Other gums include locust bean, guar, tragacanth, karaya, carrageenan, and sodium alginate. Conventional slush beverages need constant mechanical agitation in order to prevent agglomeration of the ice crystals prior to sale. They must be consumed soon after purchase as they quickly revert to a completely liquid form. Any attempt to partially re-freeze melted conventional slush beverages results in a disappointing mass of a few larger agglomerates of ice which forms a separate phase of material atop a heavy, syrupy, liquid phase. A combination of pectin with other gums allowed re-freezing of melted slush beverages forming a creamy, smooth, fine-grained ice crystal structure.

WO 2010/054829 A1 (Cargill Incorporated) describes a method for improving the mouth feel of beverages by adding hydrocolloids having a particular intrinsic viscosity, and reduced calorie beverages comprising said hydrocolloids. The hydrocolloids are characterised in having an intrinsic viscosity of 5 to 500 mL/g as measured by capillary flow viscosimetry. Preferred hydrocolloids include sugar beet pectin, apple pectin and gum Arabic. It is believed that the hydrocolloid acts as a lubricant. Further hydrocolloids which positively modify the body through modifying the viscosity and/or osmolality of the beverage include guar gum, locust bean gum, cassia gum and pectin from, for example, apple, citrus, soy and potato. Preferred embodiments of the invention comprise sugar beet pectin alone or in combination with pectin from other sources such as apple pomace or citrus pulp, guar gum or mixtures thereof. Most preferably the inventive composition comprises apple pectin and citrus pectin.

Related WO 2010/057024 A1 (Cargill Incorporated) describes a method for improving the flavour of beverages by adding hydrocolloids having a particular intrinsic viscosity, the hydrocolloids are characterised in having an intrinsic viscosity of 5 to 500 mL/g as measured by capillary flow viscosimetry. Example hydrocolloids are as disclosed in WO 2010/054829 A1.

Romanchik-Cerpovicz et al (J. of the Am. Dietetic Assoc., 594-597 (2006)) discloses a study which examined the feasibility of substituting okra gum for 25 %, 50 %, 75 % or 100 % milk fat in a frozen chocolate dairy dessert. Consumers rated colour, smell, texture, flavour, aftertaste and overall acceptability. The study showed that okra gum is a suitable milk-fat ingredient substitute for up to 75 % milk fat in chocolate frozen dairy dessert.

CN 10 205 8124 A (Pengxiang Li) describes a beverage comprising okra juice and passion flower juice. The beverage has the advantage of having a comfortable taste and light colour. The passion flower juice is added to the beverage to adjust the coldness of the okra.

CN 10 230 06578 A (Xiong Wang) describes a beverage for enhancing body immunity and promoting male sexual function, the beverage comprising okra, water melon, carrot, hawthorn, medlar, celery, apple, leek, tomato and honey.

JP 2008 099 656 A (Kuzuu Miki) describes a drink for treating atopic dermatitis, obesity and diabetes, the drink comprising mucin. The mucin is obtained from okra, taro, yam, lotus root and Basella Alba (Malabar spinach).

**SUMMARY OF THE INVENTION**

The inventors have observed that a frozen beverage can be prepared with improved organoleptic properties by mixing an ingredient with a high Trouton ratio into a frozen beverage. The resulting product is the frozen beverage according to the invention which shows improved organoleptic properties such as reduced coldness, a property which is important with flowable ice containing products to prevent negative experiences such as "brain freeze" or headache.

Without wishing to be bound by theory, the inventors believe that the improvement in organoleptic qualities imparted by the frozen beverage according to the invention is due to the role of polymer and/or network structures in extracting heat from the oral cavity during consumption.

Thus in a first aspect of the invention, a frozen beverage is provided, the frozen beverage comprising:

    (a) 35 to 90, preferably 50-90 % w/w water;
    (b) 5 to 45, preferably 10 to 30 % w/w freezing point depressant;

(c) An ice crystal population wherein the number average length of the longest dimension of the ice crystals is 110 to 300, preferably 120 to 250, most preferably 150 to 250 microns; and

(d) 0.001 to 10, preferably 0.01 to 5, most preferably 0.01 to 3 % w/w a polymer ingredient having a Trouton ratio of at least 75, preferably at least 200, most preferably at least 500, as measured in a 0.2 wt. % aqueous solution at 20 degrees centigrade;

wherein the distribution of the number average length of the longest dimension of the ice crystals is monomodal; and wherein (d) is added to (a) to (c) under low shear.

The Trouton ratio ($T_R$), according to Jones et al (Rheologica Acta, 26, 20-30 (1987)), is defined as the ratio between shear ($\eta$) and extensional viscosity ($\eta E$) using the following equation, where $\varepsilon$ is the strain rate:

$$T_R(\dot{\varepsilon}) = \frac{\eta_E(\dot{\varepsilon})}{\eta(\sqrt{3}\dot{\varepsilon})}$$

A high $T_R$ indicates a material with a high extensional viscosity or "stretchy" rheology. A material with a high extensional viscosity or "stretchy" rheology can also have a lower $T_R$ when the shear viscosity of the material is high. It is the maintenance of this "stretchy" rheology in the frozen beverage of the invention which is believed to be important for the desired sensory benefits.

Low shear is achieved by mixing (d) into (a) to (c) without destroying the extensional viscosity of the ingredient.

## DESCRIPTION OF THE FIGURES

The invention is described with reference to the Figures which show in:

Figure 1    the organoleptic sensory testing scores for slushes with a nominal ice content of 23 % prepared by post-addition of okra pectin;

Figure 2    the organoleptic sensory testing scores for slushes with a nominal ice content of 53 % prepared by post-addition of okra pectin;

Figure 3    the organoleptic sensory testing scores for slushes with a nominal ice content of 53 % prepared by pre- and post-addition of okra pectin;

Figure 4    the ice size (longest ice crystal dimension) distribution in microns for slush B1; and

Figure 5    the organoleptic sensory testing scores for a slush with a nominal ice content of 53 % prepared by post-addition of Jew's mallow pectin

## DETAILED DESCRIPTION OF THE INVENTION

The invention relates, in a first aspect, to a frozen beverage in the form of a slush comprising:

(a) 35 to 90, preferably 50-90 % w/w water;
(b) 5 to 45, preferably 10 to 30 % w/w freezing point depressant;
(c) An ice crystal population wherein the number average length of the longest dimension of the ice crystals is 110 to 300, preferably 120 to 250, most preferably 150 to 250 microns; and
(d) 0.001 to 10, preferably 0.01 to 5, most preferably 0.01 to 3 % w/w a polymer ingredient having a Trouton ratio of at least 75, preferably at least 200, most preferably at least 500, as measured in a 0.2 wt. % aqueous solution at 20 degrees centigrade;

wherein the distribution of the number average length of the longest dimension of the ice crystals is monomodal; and wherein (d) is added to (a) to (c) under low shear.

The Trouton ratio is measured in accordance with the method described in Example 1. Preferably, the Trouton ratio of the ingredient as measured in a 0.2 wt. % aqueous solution at 20 degrees centigrade does not exceed 2000.

The freezing point depressant is preferably selected from the group consisting of monosaccharides, disaccharides, starch hydrolysates, maltodextrins, soluble fibre, polyols and mixtures thereof.

The materials used as freezing point depressants often serve not just to reduce the ice content of the frozen beverage at temperatures below the freezing point of water, but also as sweeteners, and as bulk fillers occupying space improving the rheology of the matrix phase. They materials must have a taste and/or flavour which is compatible with the frozen beverage flavour. Examples of suitable monosaccharides are dextrose, fructose and galactose. Examples of suitable disaccharides include sucrose and lactose. Examples of soluble fibre include inulin, fructooligosaccharide and polydextrose. Example polyols are erythritol, arabitol, xylitol, sorbitol, mannitol, lactitol, maltitol, cellobiitol and glycerol. Different combinations of these materials may be used depending upon the required final product properties including sweetness, calorie content, texture, ice content, etc.

The ingredient having a Trouton ratio of at least 75, preferably at least 200, most preferably at least 500, as measured in a 0.2 wt. % aqueous solution at 20 degrees centigrade is a polymer, preferably a biopolymer, even more preferably a polysaccharide.

The ingredient having a Trouton ratio of at least 75, preferably at least 200, most preferably at least 500, as measured in a 0.2 wt. % aqueous solution at 20 degrees centigrade is preferably selected from the group consisting of okra pectin, Jews mallow pectin, lime flower pectin, yellow mustard gum, flax seed gum, water-soluble extract of prickly pear cactus (Opuntia ficus-indica), water-soluble extract of Mekabu or any combination thereof and more preferably comprises okra pectin or Jews Mallow pectin or water-soluble extract of prickly pear cactus (Opuntia ficus-indica) or water-soluble extract of Mekabu or a combination thereof.

In one embodiment of the invention, the frozen beverage comprises 0 to 0.05, preferably 0 to 0.01, most preferably 0 % w/w fat.

In another embodiment of the invention, the frozen beverage comprises 0 to 0.05, preferably 0 to 0.01, most preferably 0 % w/w protein.

Typically the frozen beverage additionally includes a thickener, preferably selected from the group consisting of xanthan, guar gum, locust bean gum, carrageenan, and pectins having a Trouton ratio below 75, as measured in a 0.2 wt. % solution of said pectin in water as measured at 20 degrees centigrade. The frozen beverage typically additionally comprises a flavouring.

The frozen beverage typically is only mildly aerated, ie has a low over run, for example 10 to 50, preferably 10 to 30 %. Overrun is defined by the equation below and is measured at atmospheric pressure:

$$\% \ over \ run = \frac{(\text{Volume of frozen beverage} - \text{Volume deaerated frozen beverage})}{\text{Volume of deaerated frozen beverage}}$$

The frozen beverage preferably has a pH of 2.5 to 8, preferably 3 to 7.5, most preferably 3 to 5.

**Example 1: The Trouton ratios of various compounds/extracts**

Materials

Okra fruit (Abelmoschus esculentrus (L.) Moench)
Jew's mallow (Corchorus olitorius) leaves (Sonac Company, Alexandria, Egypt and The United Company for Food Industry, Egypt)
Lime flowers (Just Ingredients Limited, UK)
Guar gum (Grindsted™ Guar 250, Danisco)
Locust bean gum (Grindsted™ LBG 246)
Tara gum (Solgum D21004/82, Foreign Domestic Chemicals Corporation)
Sodium carboxymethyl cellulose (FMC)
Xanthan gum (CP Kelco)
k-Carrageenan (Danisco A/S)
Flax seed gum (Shaanxi Fuheng (FH) Biotechnology Co. Ltd, China)
Sugar beet pectin (Pectin Betaspec RU 301 (Hernstreith & Fox KG)
Citrus pectin A (degree of esterification ~40 % (GENU pectin LM-18 CG-Z (CP Kelco)))
Citrus pectin B (degree of esterification -35 % (GENU pectin LM-12 CG-Z (CP Kelco)))
Apple pectin powder (Solgar™ Vitamin and Herb, U.K)
OSA starch (octenyl succinic anhydride starch; National Starch).
SSPS (soluble soybean polysaccharides, obtained from SoyFIBE).
HM citrus pectin (high-methoxyl citrus pectin, JM-150, obtained from Kelco Co.).
Gum Arabic (Super Gum EM10, San-Ei Gen FFI Incorporated)
Yellow mustard gum (extracted from yellow mustard bran obtained from G S Dunn)

Prickly pear cactus (Opuntia ficus-indica) (opuntias.co.uk)
Mekabu (flowering sprout of Undaria pinnatifida) (Muso Limited)
Sodium Carboxy M Cellulose (FMC Corporation)
Sodium alginate (Danisco A/S)

A degree of estification below 50 % is considered low, and thus both citrus pectins A and B are considered to be low methoxy (LM) pectins.

Okra pectin was extracted from okra using the following method:

1. The okra was washed, the calyx removed and the remainder chopped roughly.
2. The chopped product was then blended with a double weight amount of 96 % w/w ethanol initially using a handheld blender and then a Silverson homogenizer.
3. The blend was then sieved through a 75 micron sieve and the filtrate discarded.
4. The solids were resuspended in a double weight amount of 96 % w/w ethanol and homogenised twice with a Silverson homogenizer.
5. The suspension was vacuum filtered through Miracloth (22-25 microns) and the filtrate discarded.
6. A suspension of 350 g of solid, 10 g NaCl and boiling water to a total volume of 5 litres was prepared.
7. The suspension was stirred with a paddle stirrer for at least 2 hours at 200 rpm.
8. The suspension was then centrifuged for 55 minutes at 4000 g and the supernatant decanted.
9. Ethanol was then added to the supernatant under hand stirring over 20 minutes to give a final concentration of 45 % w/w ethanol.
10. The mixture was left to stand and precipitate at room temperature for at least 1 hour.
11. The suspension was filtered through 90 micron sieve and the filtrate discarded.
12. The precipitate (okra pectin) was rinsed using 96 % w/w ethanol and freeze dried.

Jew's mallow pectin and lime flower pectin was extracted from their respective leaves using the following method:

1. Blend the whole leaves in 2 times their weight of food-grade ethanol: first with a handheld blender (20-30 secs) then using a Silverson (large screen) for 5-10 minutes.
2. Remove the Jew's Mallow pulp from the ethanol by filtering through Miracloth using a vacuum pump.
3. Re-suspend the pulp using more food-grade ethanol and filter again.
4. Repeat washing in ethanol and filtering twice.
5. Take 350 g of the pulp, add 10 g of NaCl and 350 g boiling water and mix well using a spoon, Make up to 5 L with boiling water.
6. Mix continuously using a paddle stirrer for at least 2 hours.
7. Centrifuge the mixture for 55 minutes at 4000 g using a Sorvall RC-3C centrifuge.
8. Decant the supernatant into 2 x 5 litre beakers and precipitate the pectin by addition of food-grade 96 % ethanol up to approximately 47 % w/w.
9. Filter the mixture to remove the precipitate using a 70-90 $\mu$m sieve.
10. Wash the precipitate using pure ethanol.
11. Dry the precipitate under vacuum in a freeze drier for at least 24 hour.
12. Grind the precipitate to a fine powder using a grinder and store in a cool, dry place until required.

Yellow mustard gum was extracted from yellow mustard bran according to the following method:

1. Mix 1 kg of bran powder well with 2.5-3 times weight (food grade) ethanol and leave for 10-20 minutes.
2. Sieve (90 $\mu$m).
3. Vacuum filter through Miracloth (single layer) discarding the ethanol and retaining the solid.
4. Wash twice with ethanol using vacuum filtration through Miracloth; mixing well between washes in order to remove pigments homogeneously.
5. Take 350 g of wet solid, add 10 g of NaCl, 350 g warm water and mix well.
6. Put under paddle stirrer and add boiling water to 4.8-5 litres total volume. Ensure good mixing and stir gently for at least 2 hours.
7. Centrifuge for 55 minutes at 5000 g and decant supernatant into 2 x 5 litre beakers (discard solid).
8. Add supernatant in 400 ml aliquots to ethanol (90 % of the weight of the supernatant) and hand mix slowly using a gentle, folding action. Mix well and leave to precipitate at room temperature for at least 1 hour with occasional stirring.
9. Sieve (90-250 $\mu$m).
10. Wash precipitate in ethanol.
11. Dry precipitate in freeze drier.

12. Grind precipitate to a fine powder (<1 mm) using a grinder.

Methods

Extensional viscosity was measured using a THERMO Electron Corporation Capillary break-up Extensional Rheometer (CaBER 1). The plate diameters were 6 mm with an initial plate separation of 2 mm and a final plate separation of 8 mm. 50 $\mu$l of sample was loaded between the plates at 20 °C and the plates separated from the initial to the final separation distance over 0.05 seconds. A transient liquid bridge (i.e. a liquid filament) is formed between the two plates, which ultimately breaks up upon separation of the discs. The instrument measures the diameter of the midpoint of the liquid filament formed between the two discs and it tracks its thinning until the break-up point. The method has no means to control the rate at which the filament is thinning (i.e. the strain rate). This rate is determined by the balance of the capillary force, trying to shrink and break the liquid filament, and the opposing viscous force. The latter force is determined by the extensional viscosity which can vary as the contraction rate changes with time. The processing of the raw data and the calculation of the extensional viscosity was done using CaBER Analysis software (v4.50 built 29 November 04, designed by Cambridge Polymer Group, http://www.campoly.com). The CaBER Analysis software has a built-in function to select the usable range of data. It cuts off the data where the filament is too thick and its shrinkage is driven by the gravity and leaves the part where the shrinkage is due to the capillary force only.

But, in addition to this, we also remove the last data points where, after the break-up occurs, the retraction of the broken filament ends causes additional wavy features in the filament diameter data curve. According to Jones et al (Rheologica Acta, 26, 20-30 (1987)), the Trouton ratio ($T_R$) can be defined as the ratio between shear ($\eta$) and extensional viscosity ($\eta_E$) using the following equation, where $\varepsilon$ is the strain rate:

$$T_R(\dot{\varepsilon}) = \frac{\eta_E(\dot{\varepsilon})}{\eta(\sqrt{3}\dot{\varepsilon})}$$

A high $T_R$ indicates a material with a high extensional viscosity or "stretchy" rheology. A material with a high extensional viscosity or "stretchy" rheology can also have a lower $T_R$ when the shear viscosity of the material is high. It is the maintenance of this "stretchy" rheology in our composition which we believe is important for sensory benefits. For the calculation of the Trouton ratio, the highest stable (plateau) value of the extensional viscosity was used, taken from a plot of apparent viscosity versus strain rate, and the corresponding strain rate was recorded for later use to determine the corresponding shear viscosity value (for example a strain rate of 100 s$^{-1}$ corresponds to a shear rate of 100*1.73 = 173 s$^{-1}$).

Shear viscosity was measured using an Anton Paar rheometer with a 17 mm profiled cup and bob (Couette - rotating cup) geometry at 20 °C. The shear rate was increased from 0.01 to 1000 s$^{-1}$ over 51 measurement points with 10 seconds allowed at the start of the test (low shear rate) reducing linearly to 5 seconds at the end of the test (higher shear rate). Viscosity-shear rate flow curves were produced for the thawed products at 20 °C.

0.2 % w/w aqueous solutions of the above-mentioned compounds/extracts were prepared and the Trouton ratio determined as described above.

Results

The extensional shear viscosities of 0.2 % w/w solutions of OSA starch, gum Arabic, SSPS, sodium carboxy M cellulose, xanthan gum and a range of commercially available pectins and other biopolymers could not be measured with the equipment available due to very short filament lifetime. In order to obtain a Trouton ratio for these compounds more concentrated solutions were prepared until a reliable measurement could be made. It is assumed that the Trouton ratio of 0.2 % w/w aqueous solutions of these compounds will be lower or at most equal to the Trouton ratio obtained at higher concentrations. The results are summarised in Table 1.

Table 1: Trouton ratio of various compounds/extracts as aqueous solutions at various % concentrations.

|  | Concentration (wt. %) | Trouton ratio |
|---|---|---|
| OSA starch | 20 | 13.9 |
| Gum Arabic | 20 | 4.9 |
| SSPS | 20 | 8.1 |

(continued)

|  | Concentration (wt. %) | Trouton ratio |
|---|---|---|
| Sugar beet pectin | 4 | 3.6 |
| Sodium alginate | 2 | 35.0 |
| Sodium carboxymethyl cellulose | 2 | 3.9 |
| HM citrus pectin | 2 | 31.2 |
| Citrus pectin A | 2 | 3.0 |
| Citrus pectin B | 2 | 3.0 |
| Apple pectin | 2 | 3.0 |
| Sodium Carboxy M Cellulose | 1 | 58.5 |
| Xanthan gum | 1 | 12.7 |
| Locust bean gum | 1 | 29.5 |
| Guar gum | 1 | 13.3 |
| k-Carrageenan | 1 | 29.8 |
| Tara gum | 1 | 5.2 |
| Okra pectin | 0.2 | 1823.1 |
| Jews Mallow pectin | 0.2 | 623.0 |
| Lime flower pectin | 0.2 | 403.8 |
| Yellow mustard gum | 0.2 | 236 |
| Flax seed gum | 0.2 | 88 |
| Prickly pear cactus (juice)[1] | 0.2 | 1569 |
| Mekabu (aqueous extract)[2] | 0.2 | 660 |
| [1] Obtained by squeezing pulp through muslin.<br>[2] Dried Mekabu was extracted by soaking in water (20 g in 100 ml) for 24 hours and squeezing through muslin. | | |

Conclusions

The Trouton ratios of 0.2 % w/w aqueous solutions of okra pectin, Jews mallow pectin, lime flower pectin, yellow mustard gum and flax seed gum, prickly pear cactus (aqueous extract) and Mekabu (aqueous extract) were found to be at least 75. The Trouton ratios of okra pectin, Jews mallow pectin, lime flower pectin, yellow mustard gum, prickly pear cactus (aqueous extract) and Mekabu (aqueous extract) are clearly far above those of other commonly used plant extracts used in foods.

**Example 2: Post-addition of okra to a slush beverage**

Slush beverages were prepared at two different nominal ice contents wherein okra was added to the already formed slush. Nominal ice content, in % w/w, is calculated at -18°C by calculation using the freezing curve for sucrose solutions as described for example on pages 28-29 of "The Science of Ice Cream", C. Clarke, RSC, Cambridge, UK, 2004. The extensional viscosities of the slush beverages were measured in accordance with the method in Example 1 and organoleptic sensory testing also conducted on the same in accordance with the method set forth in this Example 2.

Methods

Organoleptic sensory testing

A team tasting session was conducted using 6 people to assess a number of product attributes using a structured questionnaire. Each attribute was recorded on a vertical line from -5 (less of attribute) to +5 (more of attribute) with the internal reference (slushes A1 and B1) pre-scored at 0. The following attributes were scored in sequential order:

(a) "Suckability" which is the degree to which the product can be initially sucked up a 9 x 136 mm straw;
(b) "Amount of ice crystals" which is the overall amount of ice crystals (regardless of size) that can be detected in the mouth as product enters the mouth;
(c) "Ice crystal size" which is an overall immediate assessment of the degree to which the ice crystals generally feel small or larger in the mouth, detected either between tongue and palate or between teeth;
(d) "Initial smoothness" which is an immediate assessment of the degree to which the overall product feels silky/smooth in the mouth;
(e) "Coldness" which is an assessment of the degree to which the overall product feels cold in the mouth after moving the product inside the mouth; and
(f) "Final smoothness" which is an assessment of the degree to which the melted product feels smooth and silky in the mouth after moving the product around inside of the mouth until it is melted.

The following attributes were assessed following swallowing:

(a) "Mouth-coating" which is the amount of residue left around the inside of the mouth after the sample has been swallowed; and
(b) "Overall flavour" which is the intensity of the overall flavour of the product.

The panellists were able to report any other remarks about the products at the end of the questionnaire. The mean score differences from the control were plotted for each test product.

Preparation of frozen beverages in the form of a slush

5 kg samples of peach flavour slush concentrates, the formulations of which are set forth in Table 2, were prepared in the following way:

1. Boiling water was weighed into a 5L glass beaker containing a magnetic stirrer bar.
2. The sucrose and xanthan gum was added to the boiling water whilst stirring and the solution was stirred at room temperature for 45 minutes.
3. The citric acid and peach flavour was then dispersed in the sucrose and xanthan gum solution and the solution stirred for 15 minutes.
4. The solution was then stored at 5 $\pm$ 3 °C until required for use.

Table 2: Peach flavour slush concentrate formulations (pH ~ 3.0)

| Concentrate | A | B |
|---|---|---|
| Nominal ice content at -7 °C (%) | 23 | 53 |
| Ingredients (% w/w) | | |
| Sucrose | 38.00 | 23.00 |
| Citric acid | 0.078 | 0.078 |
| Water | q.s. | q.s. |
| Xanthan gum | 0.111 | 0.111 |
| Peach flavour | 0.083 | 0.083 |

70 g samples of sugar and okra concentrates, the formulations of which are set forth in Tables 3 and 4, were prepared in the following ways for respectively sugar and okra concentrates:

1. The sucrose was weighed into a clean plastic beaker.
2. Boiling water was weighed into the glass beaker.
3. The sucrose was added to the beaker whilst stirring and the solution was stirred for 45 minutes.
4. A few drops of beetroot red colouring was added and the solution stored at 5 $\pm$ 3 °C until required for use.

1. The okra powder and sucrose were combined and mixed to form a homogeneous dry mixture.

2. Approximately half of the water (cooled boiled) was added to the okra/sucrose powder and the mixture under stirring to form a homogeneous paste.

3. The remaining water (boiling temperature) was added to the sugar/okra solution under stirring.

4. A few drops of beetroot red colouring was added and the solution stirred for 1 hour before being stored at 5 ± 3 °C until required for use.

Table 3: Sugar concentrate formulations.

| Concentrate | A | B |
|---|---|---|
| Nominal ice content at -7 °C (%) | 23 | 53 |
| Ingredients (% w/w) | | |
| Sucrose | 38.00 | 23.00 |
| Water | q.s. | q.s. |

Table 4: Okra concentrate formulations.

| Concentrate | A1 | A2 | A3 | B1 | B2 | B3 |
|---|---|---|---|---|---|---|
| Nominal ice content at -7 °C (%) | 23 | 23 | 23 | 53 | 53 | 53 |
| Ingredients (% w/w) | | | | | | |
| Okra pectin | 0.2 | 0.4 | 0.6 | 0.2 | 0.4 | 0.6. |
| Sucrose | 38.00 | 38.00 | 38.00 | 23.00 | 23.00 | 23.00 |
| Water | q.s. | q.s. | q.s. | q.s. | q.s. | q.s. |

Frozen beverages in the form of a slush, according to the formulations set forth in Table 5, were then prepared by:

1. Placing the peach flavour slush concentrate in a Electrofreeze GB220 slush machine barrel and initialising the barrel rotation with a viscosity set to 4 (maximum setting) and the barrel cooling set to freezing mode (on maximum cooling rate).

2. The slush barrel cover was fitted and the slush allowed to form over 24 hours whilst ensuring that the temperature did not exceed ± 4 °C of the required temperature of -7 °C.

3. 630 g of slush was then weighed into a clean beaker and 70g of sugar or okra concentrate was added and stirred until the pink colouring was homogeneously mixed.

4. Samples for organoleptic sensory testing were tempered at -7 °C until required, samples for extensional and shear viscosity measurements were immediately frozen at -18 °C and stored until required, and samples for microscopic examination were stored at -7 °C until required (for more detail on the latter, see Example 3).

Table 5: Formulations for frozen beverages in the form of a slushes

| Concentrate | A1 | A2 | A3 | A4 | B1 | B2 | B3 | B4 |
|---|---|---|---|---|---|---|---|---|
| Nominal ice content at -7 °C (%) | 23 | 23 | 23 | 23 | 53 | 53 | 53 | 53 |
| Ingredients (% w/w) | | | | | | | | |
| Okra pectin | 0.00 | 0.02 | 0.04 | 0.06 | 0.00 | 0.02 | 0.04 | 0.06. |
| Sucrose | 38.00 | 38.00 | 38.00 | 38.00 | 23.00 | 23.00 | 23.00 | 23.00 |
| Xanthan gum | 0.10 | 0.10 | 0.10 | 0.10 | 0.10 | 0.10 | 0.10 | 0.10 |
| Citric acid | 0.07 | 0.07 | 0.07 | 0.07 | 0.07 | 0.07 | 0.07 | 0.07 |
| Peach flavour | 0.075 | 0.075 | 0.075 | 0.075 | 0.075 | 0.075 | 0.075 | 0.075 |
| Water | q.s | q.s. | q.s. | q.s. | q.s | q.s. | q.s. | q.s. |

The extensional viscosities of the slush beverages were measured in accordance with the method set forth in Example 1 and organoleptic sensory testing also conducted on the same in accordance with the method set forth herein.

Results

The results in Table 6 show that post-addition of okra (0.02 to 0.06 %) to slush formulations results in compositions with elevated extensional viscosities compared to the controls , i.e. the slushes are highly elastic. Extensional viscosity is seen to increase at both sucrose concentrations with increasing okra pectin concentration.

Table 6: Extensional viscosities of slushes with and without okra pectin at different nominal ice content (n.d. = not detectable). Standard deviations are given at 95 % confidence limits for n = 4.

| Slush | A1 | A2 | A3 | A4 | B1 | B2 | B3 | B4 |
|---|---|---|---|---|---|---|---|---|
| Nominal ice content at -7 °C (%) | 23 | 23 | 23 | 23 | 53 | 53 | 53 | 53 |
| Sucrose (% w/w) | 38 | 38 | 38 | 38 | 23 | 23 | 23 | 23 |
| Okra pectin (% w/w) | 0.00 | 0.02 | 0.04 | 0.06 | 0.00 | 0.02 | 0.04 | 0.06 |
| | | | | | | | | |
| Extensional viscosity (Pa.s) | 0.435 ± 0.017 | 50.18 ± 3.33 | 101.70 ± 12.94 | 199.58 ± 18.17 | n.d. | 13.74 ± 0.04 | 63.00 ± 1.9 | 86.03 ± 4.75 |

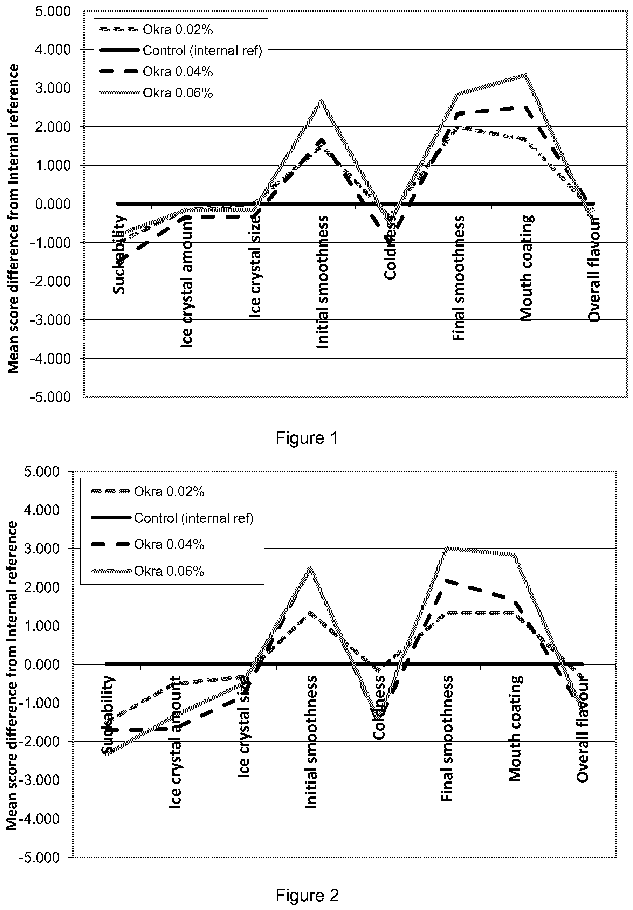

The results from the organoleptic sensory testing (n = 6 testers) are shown in Figure 1 for slushes with nominal ice contents of 23 % and in Figure 2 for slushes with nominal ice contents of 53 %. Slushes A1 and B1 were the controls in Figures 1 and 2 respectively. The slushes comprising from 0.02% to 0.06 % w/w okra pectin were observed to have improved initial smoothness, reduced coldness, increased final smoothness and increased mouth-feel compared to a control slush prepared in the absence of okra pectin and, in general, the difference between the control and okra slushes increases with increasing concentration.

Conclusions

Post-addition of okra pectin to a frozen beverage in the form of a slush at two ice phase volumes provides a product with a smoother initial and final texture and a warmer drinking product with an increased mouth-feel compared to a control without okra pectin. Thus it appears that in order to improve the organoleptic properties of slush beverages we require the melted products to provide an extensional viscosity preferably above of at least 13 Pa.s.

**Example 3: Pre-addition of okra to a slush beverage**

Slushes were prepared at a nominal ice content of 53 % wherein okra was added to the slush concentrate after ice was allowed to form for 24 hours but before dispensing the slush from the tank. Samples were dispensed after specific time-points (½, 1, 2 and 24 hours).

Method

5 kg samples of peach flavour slush concentrates were prepared in the manner described in Example 2. 555.56 g samples of 23 % w/w sugar and 0.4 % w/w okra concentrates were also prepared in the manner described in Example 2. A frozen beverage in the form of a slush was then prepared by placing a 5 kg sample of peach flavour slush concentrate in the slush machine allowing slush to form over 24 hours as already described in Example 1. Then either the sugar or okra concentrates was added to the peach flavour slush and allowed to mix for 1 hour, after which samples were then taken immediately and then 0.5, 1, 2 and 24 hours thereafter for extensional and shear viscosity measurements conducted in accordance with the procedures set forth in Example 1. A sample was also taken immediately after the initial 1 hour of mixing and stored at -7 degrees centigrade for 1 hour before presentation for team tasting. The composition of the frozen beverage was identical to that for B3 in Table 4.

The control slush for extensional viscosity measurements, measured in accordance with the method of Example 1, and for the organoleptic sensory testing, conducted in accordance with the method of Example 2, was B1 from Table 5. In addition, slush B3 in Table 5 was the positive control slush for the organoleptic sensory testing.

Results

The results in Table 7 show that pre-addition of okra (0.04 %) to slush formulations results in compositions with an extensional viscosity which is not only much reduced compared to those prepared by a post-addition method but which also exhibit an ever decreasing value with increased residence in the slush machine.

Table 7: Extensional viscosities of slushes with and without okra pectin at a nominal ice content of 53 % wherein the okra pectin is added before ice crystal formation (n.d. = not detectable). Standard deviations are given at 95 % confidence limits for n = 4.

| Slush | C1 | C2 | C3 | C4 |
|---|---|---|---|---|
| Nominal ice content at -7 °C (%) | 53 | 53 | 53 | 53 |
| Sucrose (% w/w) | 23 | 23 | 23 | 23 |
| Okra pectin (% w/w) | 0.04 | 0.04 | 0.04 | 0.04 |
| Period in slush machine barrel (hours) | 0.5 | 1 | 2 | 24 |
| | | | | |
| Extensional viscosity (Pa.s) | 9.43 ± 1.07 | 3.14 ± 0.71 | n.d. | n.d. |

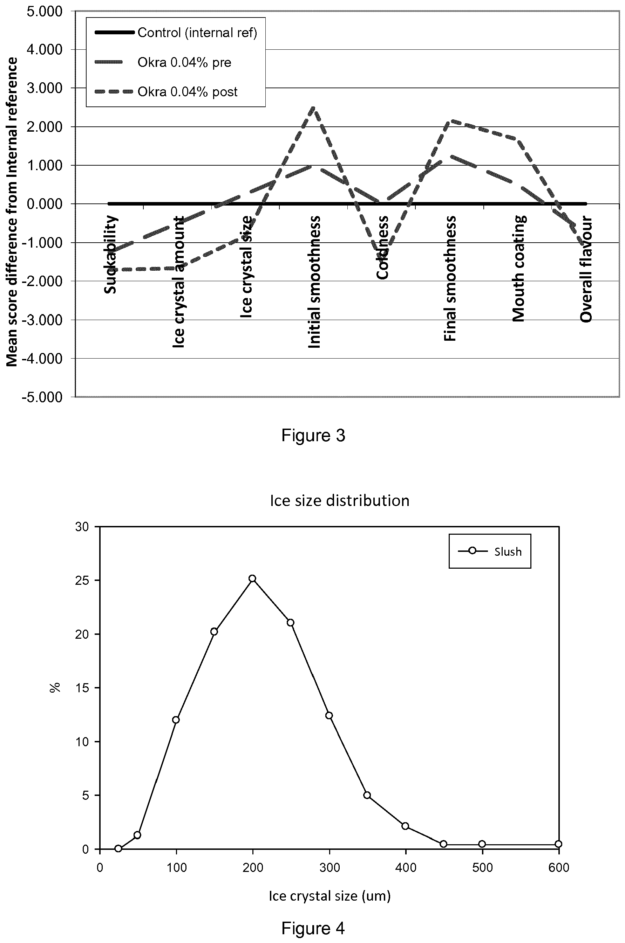

The results from the organoleptic sensory testing (n = 4 persons) are shown in Figure 3 for slushes with nominal ice contents of 53 % compared to a positive control slush comprising the same ice content and concentration of okra pectin but prepared by post-addition of the okra pectin, i.e slush B3 in Table 5, and another control slush comprising the same ice content and no okra pectin, i.e slush B1 in Table 5.

It was observed that the pre-addition of 0.04 % w/w okra pectin to the slush barrel 60 minutes prior to consumption slightly increases initial and final smoothness and mouth-feel compared to the control without okra. However the sensorial effect is less than when the same concentration of okra is post-added to a slush with the same nominal ice content. This could indicate that okra pectin is shear sensitive.

Conclusion

Okra pectin can be added to slushes to provide improved organoleptic sensory benefits. However pre-addition of okra pectin prior to dispensing from the slush barrel reduces the sensorial benefits compared to post-addition. This is possibly due to the shear sensitivity of okra pectin reducing the functionality of the okra pectin in the slush. In particular, the results show that even after 30 minutes in the slush barrel the extensional viscosity is reduced to below 10 Pa.s, a value at which any sensory benefits would not be expected. This is confirmed in Figure 3.

**Example 4: Ice crystal measurement**

The number average lengths of the longest ice crystal dimension of slushes A1, A4, B1 and B4 in Table 5 were measured using cryo-scanning electron microscopy.

Method

Stubs were pre-cooled to -7 °C. After mounting slush samples onto the stubs, they were immediately plunged into liquid nitrogen and then transferred to a Gatan Alto 2500 low temperature preparation chamber and the pressure reduced to $2 \times 10^{-5}$ mBar. The temperature was then increased to -90 °C and each of the slush samples fractured using a fine scalpel. Water is sublimed from the ice surface for 40 seconds to etch the surface in order to create surface topography specific to ice crystals. Then the temperature was reduced to -110 °C and sample sputter coated with 2 nm platinum.

The coated samples were then transferred to a Jeol 7600 field emission scanning electron microscope fitted with a Gatan cold stage and cooled to -130 °C and representative digital images recorded at x 50. Analysis of the images was conducted using Olympus SCANDIUM Soft Imaging Solutions GmbH v. 5.2 software. At least 200 ice crystals were manually segmented by defining ice matrix interfaces using closed polygon outlining software for aspect ratio and arbitrary line for maximum ice crystal length.

Results

The results are presented in Table 8 which show that the number average lengths of the longest ice crystal dimension of slushes A1, A4, B1 and B4 was about 200 microns.

Table 8: Number average lengths of the longest ice crystal dimension of slushes A1, A4, B1 and B4.

| Slush | A1 | A4 | B1 | B4 |
|---|---|---|---|---|
| Nominal ice content at -7 °C (%) | 23 | 23 | 53 | 53 |
| Sucrose (% w/w) | 38 | 38 | 23 | 23 |
| Okra pectin (% w/w) | 0.00 | 0.06 | 0.00 | 0.06 |
| | | | | |
| Number average length of the longest ice crystal dimension (microns) | 205 | 193 | 190 | 205 |
| Number of ice crystals | 305 | 329 | 243 | 219 |

The size distribution of slush B1 is shown in Figure 4 from which it is apparent that the distribution is monomodal.

Conclusions

Post-addition of okra pectin to frozen slush drinks does not affect the average size of ice crystal in the product. This suggests that any impact on the sensory properties of slush drinks is due to the okra pectin itself rather than changes to the ice crystal population.

**Example 4: Post addition of Jew's mallow pectin to a slush beverage**

Slush beverages were prepared wherein Jew's mallow pectin was added to the already formed slush. Nominal ice content, in % w/w, is calculated at -18°C by calculation using the freezing curve for sucrose solutions as described for example on pages 28-29 of "The Science of Ice Cream", C. Clarke, RSC, Cambridge, UK, 2004. The extensional viscosities of the slush beverages were measured in accordance with the method outlined in Example 1 and organoleptic sensory testing also conducted on the same in accordance with the method set forth in Example 2.

Methods

The measurement of extensional viscosity and organoleptic properties were as that for slush products containing okra (see Example 1).

Preparation of frozen beverages in the form of a slush

6 kg of peach flavour slush concentrate, the formulation of which is set forth in Table 9, was prepared in the following way:

1. Boiling water was weighed into a large glass beaker containing a magnetic stirrer bar.
2. The sucrose and xanthan gum were mixed and added to the boiling water whilst stirring. The solution was stirred at room temperature for 45 minutes.
3. The citric acid and peach flavour was then dispersed in the sucrose and xanthan gum solution and the solution stirred for a further 15 minutes.
4. The solution weight was adjusted to 6 kg using boiling water to compensate any loss of water via evaporation. The solution was cooled quickly by placing the beaker in an ice-water bath and then stored at 5 ± 3 °C until required for use.

Table 9: Peach flavour slush concentrate formulations (pH approximately 3.0)

| Nominal ice content at -7 °C (%) | 53 |
|---|---|
| Ingredients (% w/w) | |
| Sucrose | 23.00 |
| Citric acid | 0.0875 |
| Water | q.s. |
| Xanthan gum | 0.125 |
| Peach flavour | 0.09375 |

Sugar and Jew's mallow pectin concentrates, the formulations of which are set forth in Tables 10 and 11, were prepared in the following way:

Sugar concentrate

1. The sucrose and potassium sorbate were weighed into a clean plastic beaker.

2. Boiling water was weighed into the glass beaker.

3. The sucrose and potassium sorbate were added to the beaker whilst stirring and the solution was stirred for 45 minutes.

4. A few drops of beetroot red colouring was added and the solution stored at 5 ± 3 °C until required for use.

Jew's mallow Pectin concentrate

1. The Jew's Mallow pectin powder and sucrose were combined and mixed to form a homogeneous dry mixture.
2. Approximately 1/3 of the total volume of (boiling) water was added to the Jew's Mallow pectin /sucrose mixture and the mixture was stirred using a spatula to form a homogeneous paste. Another 1/3 of the total volume of (boiling) water was added and the mixture stirred. Potassium sorbate was added to the solution.
3. The solution was stirred at room temperature for 1 hour.
4. The solution was sieved through a metal kitchen sieve and the remaining (boiling) water was poured through the sieve to remove any remaining pectin solution.
5. A few drops of beetroot red colouring was added and the solution was stored at 5 ± 3 °C until required for use.

Table 10: Sugar concentrate formulation.

| Nominal ice content at -7 °C (%) | 53 |
|---|---|
| Ingredients (% w/w) | |
| Sucrose | 23.00 |
| Potassium sorbate | 0.2 |
| Water | q.s. |

Table 11: Jew's Mallow pectin concentrate formulation.

| Nominal ice content at -7 °C (%) | 53 |
|---|---|
| Ingredients (% w/w) | |
| Jew's Mallow pectin | 1.75 |
| Potassium sorbate | 0.2 |

(continued)

| Nominal ice content at -7 °C (%) | 53 |
|---|---|
| Ingredients (% w/w) | |
| Sucrose | 23.00 |
| Water | q.s. |

Frozen beverages in the form of a slush were then prepared by:

1. Placing the peach flavour slush concentrate in a Electrofreeze GB220 slush machine barrel and initialising the barrel rotation with a viscosity set to 4 (maximum setting) and the barrel cooling set to freezing mode (on maximum cooling rate).
2. The slush barrel cover was fitted and the slush allowed to form over 24 hours.
3. Slush products were prepared by mixing 2 parts of the concentrates with 8 parts of the pre-formed slush: 560 g of slush was weighed into a clean measuring jug and 140g of sugar or Jew's Mallow pectin concentrate was added and stirred until the pink colouring was homogeneously mixed.
4. Samples for organoleptic sensory testing were tempered in a freezer at -7 °C until required (approx. 1-2 hours), samples for extensional and shear viscosity measurements were immediately frozen at -18 °C and stored until required.

The formulations of the final slush beverages are provided in Table 12.

Table 12: Final slush beverage formulations.

| Final product | D1 | D2 |
|---|---|---|
| Nominal ice content at -7 °C (%) | 53 | 53 |
| Ingredients (% w/w) | | |
| Jew's Mallow pectin | 0 | 0.35 |
| Potassium sorbate | 0.2 | 0.2 |
| Citric acid | 0.07 | 0.07 |
| Xanthan gum | 0.1 | 0.1 |
| Peach flavour | 0.075 | 0.075 |
| Sucrose | 23.00 | 23.00 |
| Water | q.s. | q.s |

The extensional viscosities of the slush beverages were measured in accordance with the methods outlined in Example 1 and organoleptic sensory testing also conducted on the same in accordance with the method set forth in Example 2.

Results

The results in Table 13 show that post-addition of Jew's mallow pectin to a slush beverage results in a composition with an extensional viscosity of 22.14 Pa.s compared to a control slush (without Jew's mallow pectin) where no detectable extensional viscosity is determined.

Table 13: Extensional viscosities of slushes with and without Jew's mallow pectin. Standard deviations are given at 95% confidence limits for n = 3. n.d = not detectable.

| Slush | D1 | D2 |
|---|---|---|
| Nominal ice content at -7 °C (%) | 53 | 53 |
| Sucrose (% w/w) | 23 | 23 |
| Jew's Mallow pectin (% w/w) | 0 | 0.35 |
| Average apparent extensional viscosity (Pa.s) | n.d | 22.14 ± 4.03 |

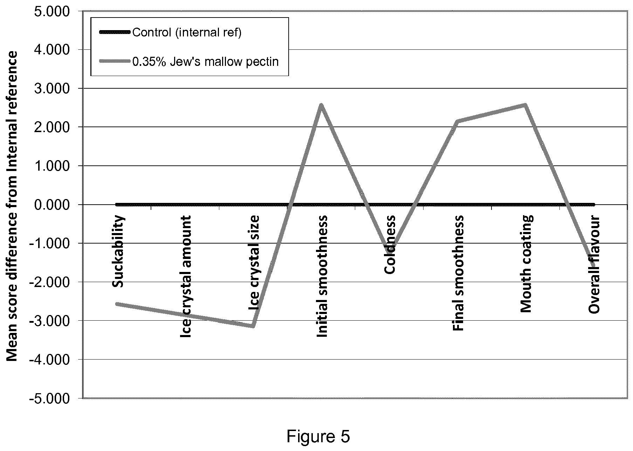

The results from the organoleptic sensory testing (n = 7) are shown in Figure 5. The slush comprising 0.35 % w/w Jew's mallow pectin were observed to have improved initial smoothness, reduced coldness, increased final smoothness and mouth-feel compared to a control slush prepared in the absence of Jew's mallow pectin.

Conclusions

Post-addition of Jew's mallow pectin to a frozen beverage in the form of a slush provides a warmer drinking product with less detectable size (amount and size) compared to a control without Jew's mallow pectin. This is thought to be due to the increased extensional viscosity imparted by Jew's mallow pectin allowing the product to provide a cohesive film which insulates the oral mucosa from the ice crystals in the product.

**Claims**

1. A frozen beverage in the form of a slush comprising:

    (a) 35 to 90, preferably 50-90 % w/w water;
    (b) 5 to 45, preferably 10 to 30 % w/w freezing point depressant;
    (c) An ice crystal population wherein the number average length of the longest dimension of the ice crystals is 110 to 300, preferably 120 to 250, most preferably 150 to 250 microns; and
    (d) 0.001 to 10, preferably 0.01 to 5, most preferably 0.01 to 3 % w/w a polymer ingredient having a Trouton ratio of at least 75, preferably at least 200, most preferably at least 500, as measured in a 0.2 wt. % aqueous solution at 20 degrees centigrade;

    wherein the distribution of the number average length of the longest dimension of the ice crystals is monomodal; and wherein (d) is added to (a) to (c) under low shear.

2. A frozen beverage according to claim 1 wherein the freezing point depressant is selected from the group consisting of monosaccharides, disaccharides, starch hydrolysates, maltodextrins, soluble fibre, polyols and mixtures thereof.

3. A frozen beverage according to claim 1 or claim 2 wherein the polymer ingredient is selected from the group consisting of okra pectin, Jews mallow pectin, lime flower pectin, yellow mustard gum, flax seed gum, water-soluble extract of prickly pear cactus (Opuntia ficus-indica), water-soluble extract of Mekabu or any combination thereof and more preferably comprises okra pectin or Jews Mallow pectin or water-soluble extract of prickly pear cactus (Opuntia ficus-indica) or water-soluble extract of Mekabu or a combination thereof.

4. A frozen beverage according to any one of the preceding claims wherein the frozen beverage comprises 0 to 0.05, preferably 0 to 0.01, most preferably 0 % w/w fat.

5. A frozen beverage according to any one of the preceding claims wherein the frozen beverage comprises 0 to 0.05, preferably 0 to 0.01, most preferably 0 % w/w protein.

6. A frozen beverage according to any one of the preceding claims wherein the frozen beverage additionally includes a thickener, preferably selected from the group consisting of xanthan, guar gum, locust bean gum, carrageenan, and pectins having a Trouton ratio below 75, as measured in a 0.2 wt. % solution of said pectin in water as measured at 20 degrees centigrade.

7. A frozen beverage according to any one of the preceding claims wherein the frozen beverage additionally comprises a flavouring.

8. A frozen beverage according to any one of the preceding claims wherein the frozen beverage has an over run of 10 to 50, preferably 10 to 30 %.

9. A frozen beverage according to any one of the preceding claims wherein the frozen beverage has a pH of 2.5 to 8, preferably 3 to 7.5, most preferably 3 to 5.

**Patentansprüche**

1.  Gefrorenes Getränk in Form eines Slushs, umfassend:

    (a) 35 bis 90, vorzugsweise 50 bis 90% Gew./Gew. Wasser;
    (b) 5 bis 45, vorzugsweise 10 bis 30% Gew./Gew. Gefrierpunkterniedriger;
    (c) eine Eiskristallpopulation, wobei die zahlenmittlere Länge der längsten Dimension der Eiskristalle 110 bis 300, vorzugsweise 120 bis 250, höchst bevorzugt 150 bis 250 Mikrometer beträgt, und
    (d) 0,001 bis 10, vorzugsweise 0,01 bis 5, höchst bevorzugt 0,01 bis 3% Gew./Gew. einer polymeren Zutat, die ein Trouton-Verhältnis von mindestens 75, vorzugsweise von mindestens 200, höchst bevorzugt von mindestens 500, gemessen in einer 0,2 gew.-%-igen wässrigen Lösung bei 20 Grad Celsius, aufweist,

    wobei die Verteilung der zahlenmittleren Länge der längsten Dimension der Eiskristalle monomodal ist und wobei (d) unter geringer Scherung zu (a) bis (c) gegeben wird.

2.  Gefrorenes Getränk nach Anspruch 1, wobei der Gefrierpunkterniedriger aus der Gruppe ausgewählt ist, die aus Monosacchariden, Disacchariden, Stärkehydrolysaten, Maltodextrinen, löslicher Faser, Polyolen und Mischungen davon besteht.

3.  Gefrorenes Getränk nach Anspruch 1 oder Anspruch 2, wobei die polymere Zutat aus der Gruppe ausgewählt ist, die aus Okra-Pektin, Judenmalve-Pektin, Lindenblütenpektin, Gelbem Senfgummi, Flachssamengummi, wasserlöslichem Extrakt vom Feigenkaktus (Opuntia ficus-indica), wasserlöslichem Extrakt von Mekabu oder irgendeiner Kombination davon besteht und bevorzugter Okra-Pektin oder Judenmalve-Pektin oder wasserlöslichen Extrakt von Feigenkaktus (Opuntia ficus-indica) oder wasserlöslichen Extrakt von Mekabu oder eine Kombination davon umfasst.

4.  Gefrorenes Getränk nach irgendeinem der vorhergehenden Ansprüche, wobei das gefrorene Getränk 0 bis 0,05, vorzugsweise 0 bis 0,01, höchst bevorzugt 0% Gew./Gew. Fett umfasst.

5.  Gefrorenes Getränk nach irgendeinem der vorhergehenden Ansprüche, wobei das gefrorene Getränk 0 bis 0,05, vorzugsweise 0 bis 0,01, höchst bevorzugt 0% Gew./Gew. Protein umfasst.

6.  Gefrorenes Getränk nach irgendeinem der vorhergehenden Ansprüche, wobei das gefrorene Getränk zusätzlich ein Verdickungsmittel einbezieht, das vorzugsweise aus der Gruppe ausgewählt ist, die aus Xanthan, Guargummi, Johannesbrotmehl, Carrageen und Pektinen mit einem Trouton-Verhältnis unter 75, gemessen in einer 0,2 gew.-%-igen Lösung des Pektins in Wasser bei 20 Grad Celsius, besteht.

7.  Gefrorenes Getränk nach irgendeinem der vorhergehenden Ansprüche, wobei das gefrorene Getränk zusätzlich einen Aromastoff umfasst.

8.  Gefrorenes Getränk nach irgendeinem der vorhergehenden Ansprüche, wobei das gefrorene Getränk einen Überlauf von 10 bis 50, vorzugsweise 10 bis 30%, aufweist.

9.  Gefrorenes Getränk nach irgendeinem der vorhergehenden Ansprüche, wobei das gefrorene Getränk einen pH von 2,5 bis 8, vorzugsweise von 3 bis 7,5, höchst bevorzugt von 3 bis 5, aufweist.

**Revendications**

1.  Boisson congelée dans la forme d'une neige fondue comprenant :

    (a) 35 à 90, de préférence 50-90 % en masse/masse d'eau ;
    (b) 5 à 45, de préférence 10 à 30 % en masse/masse d'abaisseur du point de congélation ;
    (c) une population de cristal de glace dans laquelle la longueur moyenne en nombre de la dimension la plus longue des cristaux de glace est de 110 à 300, de préférence de 120 à 250, encore mieux de 150 à 250 microns ; et
    (d) 0,001 à 10, de préférence 0,01 à 5, encore mieux 0,01 à 3 % en masse/masse d'un ingrédient polymère présentant un rapport Trouton d'au moins 75, de préférence d'au moins 200, encore mieux d'au moins 500, comme mesuré dans une solution aqueuse à 0,2 % en masse à 20 degrés centigrade ;

dans laquelle la distribution de la longueur moyenne en nombre de la dimension la plus longue des cristaux de glace est monomodale ; et

dans laquelle (d) est ajouté dans (a) à (c) sous un faible cisaillement.

2. Boisson congelée selon la revendication 1, dans laquelle l'abaisseur du point de congélation est choisi dans le groupe consistant en monosaccharides, disaccharides, hydrolysats d'amidon, maltodextrines, fibre soluble, polyols, et mélanges de ceux-ci.

3. Boisson congelée selon la revendication 1 ou la revendication 2, dans laquelle l'ingrédient polymère est choisi dans le groupe consistant en pectine okra, pectine de mauve des Juifs, pectine de fleur de citron vert, gomme de moutarde jaune, gomme de graine de lin, extrait de cactus de figue de Barbarie (Opuntia ficus-indica) soluble dans l'eau, extrait de Mekabu soluble dans l'eau ou combinaison quelconque de ceux-ci et comprend encore mieux de la pectine okra ou de la pectine de mauve des Juifs ou un extrait de cactus de figue de Barbarie (Opuntia ficus-indica) soluble dans l'eau ou un extrait de Mekabu soluble dans l'eau ou une combinaison de ceux-ci.

4. Boisson congelée selon l'une quelconque des revendications précédentes, dans laquelle la boisson congelée comprend de 0 à 0,05, de préférence de 0 à 0,01, encore mieux 0 % en masse/masse de graisse.

5. Boisson congelée selon l'une quelconque des revendications précédentes, dans laquelle la boisson congelée comprend de 0 à 0,05, de préférence de 0 à 0,01, encore mieux 0 % en masse/masse de protéine.

6. Boisson congelée selon l'une quelconque des revendications précédentes, dans laquelle la boisson congelée inclut de plus un épaississant, choisi de préférence dans le groupe consistant en xanthane, gomme guar, gomme de caroube, carraghénane, et pectines présentant un rapport Trouton inférieur à 75, comme mesuré dans une solution à 0,2 % en masse de ladite pectine dans l'eau comme mesuré à 20 degrés centigrade.

7. Boisson congelée selon l'une quelconque des revendications précédentes, dans laquelle la boisson congelée comprend de plus un arôme.

8. Boisson congelée selon l'une quelconque des revendications précédentes, dans laquelle la boisson congelée présente un débordement de 10 à 50, de préférence de 10 à 30 %.

9. Boisson congelée selon l'une quelconque des revendications précédentes, dans laquelle la boisson congelée présente un pH de 2,5 à 8, de préférence de 3 à 7,5, encore mieux de 3 à 5.

Figure 1

Figure 2

Figure 3

Ice size distribution

Figure 4

Figure 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3826829 A
- WO 2010054829 A1
- WO 2010057024 A1
- CN 102058124 A
- CN 1023006578 A
- JP 2008099656 A

**Non-patent literature cited in the description**

- **ROMANCHIK-CERPOVICZ et al.** *J. of the Am. Dietetic Assoc.,* 2006, 594-597
- **JONES et al.** *Rheologica Acta,* 1987, vol. 26, 20-30
- **C. CLARKE.** The Science of Ice Cream. RSC, 2004, 28-29